# FASCICULE DE BREVET EUROPEEN

(11) **EP 0 960 949 B1**
(45) Date de publication et mention de la délivrance du brevet: **03.09.2003**
(21) Numéro de dépôt: 99410074.1
(22) Date de dépôt: 28.05.1999
(51) Int. Cl.: C21D 1/767, F27B 5/16

(54) **Cellule de trempe sous gaz**
Gasabschreckkammer
Gas quenching device

(30) Priorité: 29.05.1998 FR 9806971
(43) Date de publication de la demande: 01.12.1999
(73) Titulaire: ETUDES ET CONSTRUCTIONS MECANIQUES, 38176 Seyssinet-Pariset (FR)
(72) Inventeur: Pelissier, Laurent, 38430 Saint Jean de Moirans (FR)
(74) Mandataire: de Beaumont, Michel

(56) Documents cités:
- EP-A- 0 313 888
- EP-A- 0 541 046
- EP-A- 0 641 923
- DE-A- 2 501 360
- DE-A- 4 403 275
- J. NAUDOT: "La vitesse de refroidissement..." TRAITEMENT THERMIQUE, vol. 133, no. 3, 1979, pages 31-35, XP002093519

## Description

La présente invention concerne une cellule de trempe sous gaz, et plus particulièrement le système de brassage de gaz d'une telle cellule.

Les procédés de trempe sous gaz présentent de nombreux intérêts par rapport à des procédés de trempe par liquide, notamment le fait que les pièces traitées sortent sèches et propres.

L'article intitulé "La vitesse de refroidissement, point capital pour le traitement thermique en fours sous vide" par J. Naudot, paru dans "Traitement thermique" N°133-79, traite de l'influence de divers paramètres et du choix des gaz sur l'efficacité de la trempe, principalement la vitesse de trempe. Il est constant que si l'on veut augmenter la vitesse de trempe, on doit augmenter le débit massique du gaz, c'est-à-dire augmenter sa vitesse et sa pression statique. L'article susmentionné mentionne qu'au-delà de 4 à 5 bars de pression statique d'azote, le gain d'efficacité est contrarié par le coût des moteurs de puissance élevée nécessaires au brassage et la consommation de gaz.

Le brevet européen 0 313 888 propose d'utiliser des gaz légers, tels que l'hélium ou l'hydrogène, à des pressions statiques élevées. La puissance des moteurs de brassage serait alors comparable à celle atteinte pour des gaz plus lourds à des pressions plus faibles. Toutefois, les gaz légers sont particulièrement coûteux (hélium) ou dangereux (hydrogène).

L'efficacité de trempe, telle qu'elle est définie dans les documents ci-dessus, est relative à la vitesse de trempe.

Les installations de trempe sous gaz sont actuellement utilisées uniquement pour les opérations de trempe, en ce sens qu'elles sont généralement optimisées pour obtenir un débit massique de gaz le plus élevé possible.

Un objet de la présente invention est de prévoir une cellule de trempe sous gaz offrant une gamme élargie de possibilités.

Un autre objet de la présente invention est de prévoir une telle cellule de trempe offrant des performances optimales sur une grande plage de débits massiques du gaz.

Pour atteindre ces objets, la présente invention prévoit une cellule de trempe sous gaz d'une charge, comprenant des tôles de guidage et un élément de brassage entraîné par un moteur pour provoquer un écoulement de gaz entre la charge et un échangeur. L'élément de brassage est une hélice à pas réglable.

Selon un mode de réalisation de la présente invention, le pas de l'hélice est réglé pour que, à un débit massique de gaz souhaité, le moteur fonctionne avec un rendement maximal de transmission de puissance à l'écoulement.

Selon un mode de réalisation de la présente invention, la cellule est cylindrique ou parallélépipédique et l'échangeur est disposé axialement de part et d'autre de la charge, l'axe de l'hélice étant perpendiculaire au plan de l'échangeur.

Selon un mode de réalisation de la présente invention, la cellule est séparée d'un four servant à chauffer la charge avant refroidissement.

Selon un mode de réalisation de la présente invention, la cellule comporte un conduit formant une boucle externe à la cellule, par laquelle est forcé l'écoulement de gaz.

Selon un mode de réalisation de la présente invention, l'échangeur est disposé dans le conduit.

Selon un mode de réalisation de la présente invention, l'hélice est disposée dans le conduit.

Selon un mode de réalisation de la présente invention, l'échangeur est sous la forme d'un disque disposé de manière qu'il soit parcouru par des écoulements de gaz opposés à sa périphérie et en son centre.

Selon un mode de réalisation de la présente invention, l'échangeur est disposé en couronne autour de l'axe de l'hélice.

Selon un mode de réalisation de la présente invention, le gaz est de l'azote ou un mélange contenant au moins 50 % d'azote, à une pression comprise entre 1 et 50 bars.

Selon un mode de réalisation de la présente invention, la cellule comprend plusieurs hélices de brassage.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A et 1B représentent deux vues d'un premier mode de réalisation de cellule de trempe sous gaz ;
la figure 2 représente schématiquement un mode de réalisation d'un élément de brassage selon la présente invention ;
la figure 3 représente un deuxième mode de réalisation de cellule de trempe ;
la figure 4 représente un troisième mode de réalisation de cellule de trempe ; et
la figure 5 représente un quatrième mode de réalisation de cellule de trempe.

On propose, selon l'invention, d'utiliser une même cellule de trempe sous gaz pour effectuer une large gamme de traitements avec des gaz de toutes sortes, y compris des opérations dites de "refroidissement contrôlé" en faisant appel à une proportion majoritaire d'azote, qui est le gaz le plus communément utilisé.

Une telle cellule permet donc d'effectuer des trempes brutales avec des débits massiques de gaz élevés ainsi que des refroidissements contrôlés ou lents avec des débits massiques très faibles.

A cet effet, il faut pouvoir utiliser des débits massiques de gaz variables dans de grandes proportions et pouvoir limiter la puissance demandée au moteur de brassage quand les caractéristiques du gaz et les paramètres vitesse/pression choisis entraîneraient un appel de puissance excessif.

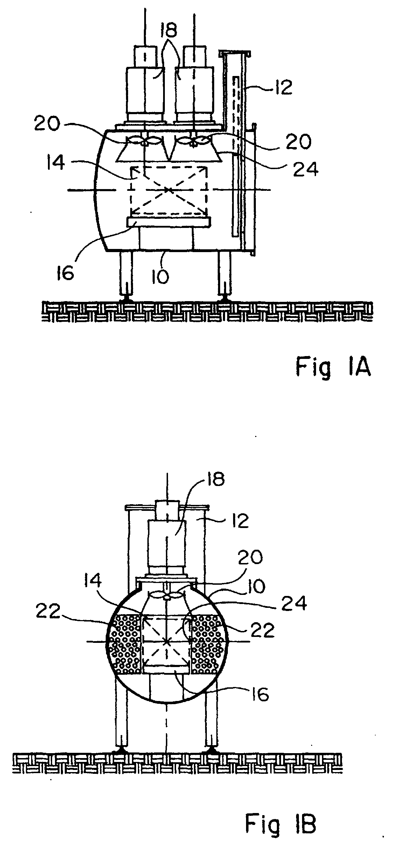

Les figures 1A et 1B représentent schématiquement une vue en coupe latérale et une vue en coupe de face d'une cellule de trempe sous gaz pouvant être utilisée selon l'invention. La cellule comporte une enceinte 10 de forme générale cylindrique ou parallélépipédique à axe horizontal. La cellule est fermée par une extrémité tandis que l'autre extrémité comporte un système de trappe guillotine 12 donnant accès à la cellule pour y introduire ou en extraire une charge à traiter 14. Bien entendu, la trappe 12 permet de fermer la cellule de trempe de manière étanche. La charge 14 est maintenue sensiblement au centre de la cellule sur un plateau 16.

La partie supérieure de la cellule est munie de deux moteurs externes à axe vertical 18, disposés l'un à côté de l'autre dans le sens longitudinal de la cellule. Ces moteurs entraînent des éléments de brassage respectifs 20 à l'intérieur de la cellule.

Comme cela est visible à la figure 1B, la cellule est munie d'un échangeur 22 disposé de part et d'autre de la charge 14 dans un plan horizontal. Entre l'échangeur 22 et la charge 14 sont disposées des tôles de guidage 24 qui rejoignent les dispositifs de brassage 20 de manière à diriger l'écoulement de gaz produit par ces derniers entre la charge 14 et l'échangeur 22. Avec cette configuration, le gaz de trempe s'écoule, par exemple en descendant à travers la charge 14 et en remontant à travers l'échangeur 22.

Classiquement, les éléments de brassage 20 sont des turbines ou des ventilateurs qui sont conçus de manière optimale pour une vitesse de gaz donnée, généralement la vitesse maximale de l'installation de trempe. Ainsi, ces éléments de brassage classiques ne sont pas optimisés pour des vitesses inférieures que l'on utilise souvent pour des matériaux nécessitant une trempe douce ou un refroidissement contrôlé.

Pour que le fonctionnement de l'installation de trempe soit optimal sur une grande plage de vitesses d'écoulement, la présente invention propose d'utiliser des hélices à pas réglable en tant qu'éléments de brassage 20. Le pas est réglé de manière à obtenir, pour une vitesse d'écoulement souhaitée, le rendement maximal de transmission de puissance des moteurs à l'écoulement, et donc une consommation d'énergie réduite au strict nécessaire.

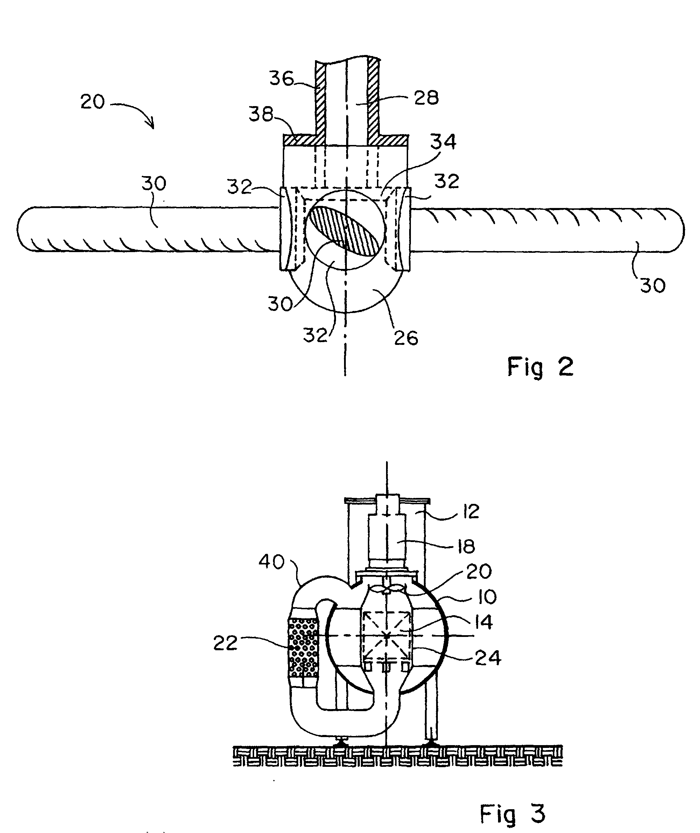

La figure 2 représente schématiquement un mode de réalisation d'hélice 20 à pas réglable. Cette hélice peut être du type utilisé sur les avions. Elle comprend un moyeu 26 relié au moteur correspondant, non représenté, par un arbre 28.

L'hélice 20 comporte plusieurs pales 30 qui s'étendent radialement à partir du moyeu 26. Chacune des pales 30 est fixée sur un socle 32 monté à rotation sur le moyeu 26 autour d'un axe radial. On peut ainsi régler l'inclinaison des pales 30, donc le pas de l'hélice, en faisant tourner les socles 32.

Afin de régler l'inclinaison de toutes les pales 30 en même temps, les socles 32 sont par exemple reliés entre eux par un pignon conique 34 dont l'axe est confondu avec celui de l'arbre 28 de l'hélice. Avec cette configuration, l'inclinaison des pales 30 peut être réglée en faisant tourner le pignon conique 34 par rapport à l'arbre 28. Pour ce faire, le pignon 34 est fixé, par exemple, à l'extrémité d'un manchon 36 entourant l'arbre 28.

L'inclinaison des pales 30 peut être réglée manuellement ou automatiquement.

Afin d'effectuer un réglage manuel, on détermine expérimentalement une abaque fournissant l'inclinaison des pales en fonction de la nature et de la pression du gaz de trempe. Pour faciliter le réglage manuel, le manchon 36 est, par exemple, muni d'un disque 38 plaqué sur le moyeu 26, que l'on fait tourner par rapport au moyeu pour obtenir l'inclinaison souhaitée des pales 30, puis que l'on serre sur le moyeu 26 à l'aide de vis. Par ailleurs, le bord du disque 38 pourra comporter une graduation en face d'un repère sur le moyeu 26.

Afin d'effectuer un réglage automatique de l'inclinaison des pales 30, le manchon 36 est couplé à un servomoteur qui fait tourner le manchon 36 par rapport à l'arbre 28. L'inclinaison des pales 30 peut alors être asservie à divers paramètres déterminant l'inclinaison optimale des pales, notamment pour obtenir une puissance minimale du moteur à la vitesse d'écoulement de gaz souhaitée.

Par ailleurs, pour obtenir la vitesse de trempe maximale et le réglage optimal correspondant des pales, l'asservissement peut être prévu pour progressivement incliner les pales 30 à partir d'un angle nul jusqu'à ce que la puissance maximale du moteur soit atteinte.

Comme cela est classique pour une hélice d'avion, les pales 30 peuvent être à pas variable, c'est-à-dire avoir une inclinaison qui va en diminuant en allant du moyeu 26 vers l'extrémité des pales. Ceci fournit une inclinaison optimale en chaque point de la pale.

La figure 3 représente un deuxième mode de réalisation de cellule de trempe sous gaz que l'on peut utiliser selon l'invention. Cette cellule comporte des éléments similaires à ceux des figures 1A et 1B, désignés par les mêmes références. La cellule comporte un conduit 40 formant une boucle à l'extérieur de la cellule. Les tôles de guidage 24 sont disposées pour que l'écoulement de gaz circule à travers la charge 14, dans le conduit 40, et à travers l'échangeur 22, ici inséré dans le conduit 40.

L'insertion de l'échangeur 22 dans le conduit 40 facilite son accès et la résolution des problèmes d'étanchéité et de maintenance. Par ailleurs, ce qui n'est pas représenté, l'hélice 20 peut également être disposée dans le conduit 40, de préférence à proximité du sol, ce qui facilite l'emploi de moteurs de puissance élevée que l'on pourra avantageusement poser sur le sol plutôt que de les monter à la partie supérieure de la cellule.

De préférence, une cellule de trempe sous gaz selon l'invention est indépendante d'un four dans lequel la charge est portée à la température souhaitée. En effet, lorsque l'on effectue la trempe dans le four ayant servi au chauffage, comme cela est usuel, le gaz de trempe doit non seulement refroidir la charge, mais également tous les éléments du four ayant chauffé. Ceci représente un excédent de chaleur non négligeable que doit évacuer le gaz de trempe et diminue sensiblement l'efficacité de l'installation. Par contre, en effectuant la trempe dans une cellule froide séparée du four, la charge est le seul élément à refroidir.

Dans une installation de trempe selon l'invention, il s'avère que le gaz optimal est l'azote ou un mélange contenant au moins 50% d'azote. Ce gaz est peu coûteux et inerte. Il peut être utilisé, dans une installation selon l'invention, à des pressions comprises entre 1 et 50 bars. L'utilisation de pressions élevées ne pose aucun problème, même en utilisant des moteurs de relativement faible puissance. En effet, la vitesse d'écoulement du gaz de trempe sera maximale par rapport à la puissance du moteur, grâce au fait que l'inclinaison des pales sera réglée de manière à obtenir le meilleur rendement de transmission de la puissance du moteur à l'écoulement de gaz sans excéder la-puissance maximale prévue dans l'installation pour le moteur.

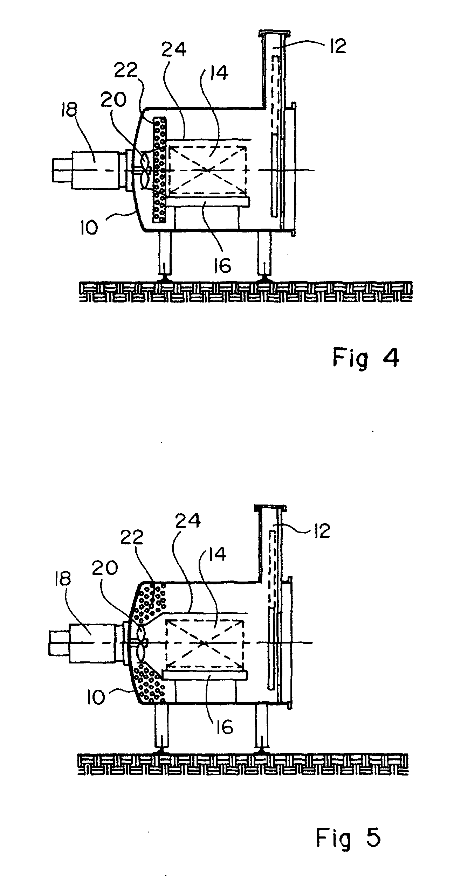

La figure 4 représente un troisième mode de réalisation de cellule de trempe que l'on peut utiliser selon l'invention. Dans ce mode de réalisation, un seul moteur 18 est monté dans l'axe de la cellule, à son extrémité fermée. L'échangeur 22 est sous la forme d'un disque vertical disposé entre la charge 14 et l'hélice 20 dont l'axe est ici horizontal. Des tôles de guidage 24 partent de l'échangeur 22 en entourant la charge 14. Avec cette configuration, on obtient un écoulement de gaz dans un premier sens à travers la partie centrale de l'échangeur 22 et la charge 14, et en sens opposé dans la partie périphérique de l'échangeur 22.

La figure 5 illustre un quatrième mode de réalisation de cellule de trempe sous gaz pouvant être utilisée selon l'invention. Ce mode de réalisation est similaire à celui de la figure 4, sauf que l'échangeur 22 est disposé en couronne autour de l'hélice 20. Les tôles de guidage 24 partent de la périphérie de l'hélice 20 et entourent la charge 14.

## Revendications

1. Cellule de trempe sous gaz d'une charge (14), comprenant des tôles de guidage (24) qui dirigent l'écoulement du gaz et un élément de brassage (20) entraîné par un moteur (18) pour provoquer un écoulement de gaz entre la charge et un échangeur (22), **caractérisée en ce que** l'élément de brassage est une hélice à pas réglable.

2. Cellule de trempe selon la revendication 1, **caractérisée en ce que** le pas de l'hélice (20) est réglé pour que, à un débit massique de gaz souhaité, le moteur fonctionne avec un rendement maximal de transmission de puissance à l'écoulement.

3. Cellule de trempe selon la revendication 1, **caractérisée en ce qu'**elle est cylindrique ou parallélépipédique et **en ce que** l'échangeur (22) est disposé axialement de part et d'autre de la charge (14), l'axe de l'hélice (20) étant perpendiculaire au plan de l'échangeur.

4. Cellule de trempe selon l'une quelconque des revendications 1 à 3, **caractérisée en ce qu'**elle est séparée d'un four servant à chauffer la charge avant refroidissement.

5. Cellule de trempe selon la revendication 1, **caractérisée en ce qu'**elle comporte un conduit (40) formant une boucle externe à la cellule, par laquelle est forcé l'écoulement de gaz.

6. Cellule de trempe selon la revendication 5, **caractérisée en ce que** l'échangeur (22) est disposé dans le conduit (40).

7. Cellule de trempe selon la revendication 5, **caractérisée en ce que** l'hélice (20) est disposée dans le conduit (40).

8. Cellule de trempe selon la revendication 1, **caractérisée en ce que** l'échangeur (22) est sous la forme d'un disque disposé de manière qu'il soit parcouru par des écoulements de gaz opposés à sa périphérie et en son centre.

9. Cellule de trempe selon la revendication 1, **caractérisée en ce que** l'échangeur (22) est disposé en couronne autour de l'axe de l'hélice.

10. Cellule de trempe selon l'une quelconque des revendications 1 à 9, **caractérisée en ce que** le gaz est de l'azote ou un mélange contenant au moins 50 % d'azote, à une pression comprise entre 1 et 50 bars.

11. Cellule de trempe selon la revendication 1, **caractérisée en ce qu'**elle comprend plusieurs hélices de brassage.

## Patentansprüche

1. Zelle bzw. Kammer zum Gas-Abschrecken (Abschrecken unter Gas) einer Charge (14), mit Führungs-bzw. Leitplatten (24) zum Lenken der Gasströmung, sowie mit einem von einem Motor (18) angetriebenen Rühr-bzw. Wirbelungs-Element (20) zur Veranlassung einer Gasströmung zwischen der Charge und einem Tauscher (22), **dadurch gekennzeichnet dass** das Rühr- bzw. Wirbelungselement ein Flügelschraubenrad bzw. Propeller mit einstellbarer Steigung (Verstellpropeller) ist.

2. Abschreckkammer bzw. -zelle nach Anspruch 1, **dadurch gekennzeichnet, dass** die Steigung der Propellerschraube (20) so eingestellt ist, dass für einen gewünschten oder Soll-Massendurchsatz des Gases der Motor mit einem maximalen Wirkungsgrad der Leistungsübertragung auf die Gasströmung arbeitet.

3. Abschreckkammer bzw.-Zelle nach Anspruch 1, **dadurch gekennzeichnet, dass** die Zelle bzw. Kammer zylindrisch oder parallelepipedisch ist und dass der Tauscher (22) beidseits der Charge (14) angeordnet und die Achse der Propellerschraube (20) rechtwinklig zum Tauscher gerichtet ist.

4. Abschreckkammer bzw. -zelle nach einem der Ansprüche 1 bis 3, **dadurch gekennzeichnet, dass** die Zelle bzw. Kammer von einem Ofen zur Vorheizung der Charge vor der Abkühlung getrennt ist.

5. Abschreckkammer bzw. -Zelle nach Anspruch 1, **dadurch gekennzeichnet, dass** sie eine eine Schleife außerhalb der Zelle bildende Rohrleitung (40) umfasst, durch welche hindurch die Gasströmung zwangsgeführt wird.

6. Abschreckkammer bzw. -zelle nach Anspruch 5, **dadurch gekennzeichnet, dass** der Tauscher (22) in der Rohrleitung (40) angeordnet ist.

7. Abschreckkammer bzw. -zelle nach Anspruch 5, **dadurch gekennzeichnet**, dass- der Rühr- bzw. Wirbelungspropeller (20) in der Rohrleitung (40) angeordnet ist.

8. Abschreckkammer bzw. -zelle nach Anspruch 1, **dadurch gekennzeichnet, dass** der Tauscher (22) in Form einer Scheibe in solcher Anordnung ausgebildet ist, dass er von entgegengesetzten Gasströmungen an seinem Umfang und in seinem Zentrum durchsetzt wird.

9. Abschreckkammer bzw. -zelle nach Anspruch 1, **dadurch gekennzeichnet, dass** der Tauscher (22) kronenförmig um die Propellerachse herum angeordnet ist.

10. Abschreckkammer bzw. -zelle nach einem der Ansprüche 1 bis 9, **dadurch gekennzeichnet, dass** das Gas Stickstoff oder ein wenigstens 50% Stickstoff enthaltendes Gasgemisch unter einem Druck zwischen 1 und 50 Bar ist.

11. Abschreckkammer bzw. -zelle nach Anspruch 1, **dadurch gekennzeichnet, dass** sie mehrere Rühr- bzw.Wirbelungs-Propellerschrauben umfasst.

## Claims

1. A cell for gas-quenching a load (14), including guiding plates (24) that orient the gas flow and a stirring element (20) driven by an engine (18) to cause a gas flow between the load and an exchanger (22), **characterized in that** the stirring element is an adjustable pitch blade propeller.

2. The quenching cell of claim 1, **characterized in that** the pitch of the blade propeller (20) is adjusted so that, at a desired gas mass flow, the engine operates with a maximum efficiency of power transmission to the flow.

3. The quenching cell of claim 1, **characterized in that** the cell is cylindrical or parallelepiped-shaped and the exchanger (22) is arranged axially on either side of the load (14), the axis of the blade propeller (20) being perpendicular to the plane of the exchanger.

4. The quenching cell of any of claims 1 to 3, **characterized in that** it is separate from a furnace used to heat up the load before cooling.

5. The quenching cell of claim 1, **characterized in that** it includes a duct (40) forming a loop external to the cell, through which is forced the gas flow.

6. The quenching cell of claim 5, **characterized in that** the exchanger (22) is arranged in the duct (40).

7. The quenching cell of claim 5, **characterized in that** the blade propeller (20) is arranged in the duct (40).

8. The quenching cell of claim 1, **characterized in that** the exchanger (22) is in the form of a disk arranged so that it is run through by opposite gas flows at its periphery and at its center.

9. The quenching cell of claim 1, **characterized in that** the exchanger (22) is arranged as a crown around the blade propeller axis.

10. The quenching cell of any of claims 1 to 9, **characterized in that** the gas is nitrogen or a mixture including at least 50% of nitrogen, at a pressure between 1 and 50 bars.

11. The quenching cell of claim 1, **characterized in that** it includes several stirring blade propellers.
